# EUROPÄISCHE PATENTANMELDUNG

(11) **EP 1 132 007 A2**
(43) Veröffentlichungstag der Anmeldung: **12.09.2001**
(21) Anmeldenummer: 01101408.1
(22) Anmeldetag: 23.01.2001
(51) Int. Cl.: A23G 9/22

(54) **Vorrichtung zur Überwachung und Steuerung von Geräten zur Herstellung von Speiseeis, Milchshake oder dergleichen**

(30) Priorität: 11.03.2000 DE 10011904
(71) Anmelder: LUMEN GmbH Nährmittel- und Maschinenfabrik, D-95326 Kulmbach (DE)
(72) Erfinder: Schankweiler, Ralf, Dipl.-Ing. (FH), 95326 Kulmbach (DE)
(74) Vertreter: Rau, Albrecht

(57) **Zusammenfassung**

Eine Vorrichtung zur Überwachung und Steuerung von Geräten zur Herstellung von Speiseeis, Milchshake oder dergleichen weist mindestens ein entsprechendes Gerät sowie eine Basisstation auf. Die Geräte sind bei den jeweiligen Kunden aufgestellt. Die Basisstation befindet sich dagegen beim Hersteller oder zentralen Vertrieb der Geräte. Die einzelnen Geräte übermitteln Daten an die Basisstation, so daß der Hersteller jederzeit über den Betriebszustand der einzelnen Geräte informiert ist und gegebenenfalls in die Funktionsweise der Geräte steuernd eingegriffen werden kann, ohne vor Ort an den einzelnen Geräten tätig zu werden.

## Beschreibung

Die Erfindung betrifft eine Vorrichtung zur Überwachung und Steuerung von Geräten zur Herstellung von Speiseeis, Milchshake oder dergleichen.

Geräte zur Herstellung von Speiseeis, Milchshake oder dergleichen aus einem pumpfähigen Ansatz sind seit langem bekannt. Diese Geräte werden in den meisten Fällen vom Hersteller vermietet und gewartet, wobei die einzelnen Geräte oft viele 100 Kilometer vom Standort des Herstellers entfernt verstreut aufgestellt sind. Der Kundendienst des Herstellers muß im Fall einer Betriebsstörung zu dem jeweiligen Gerät fahren und die Betriebsstörung beheben. Dies kann häufig bis zu einem Tag dauern, In Zeiten hohen Eiskonsums; wie zum Beispiel an heißen Sommertagen, entstehen hierdurch gravierende Verkaufsausfälle. Darüber hinaus muß der Kundendienst auch zum Beheben geringfügiger Betriebsstörungen zum jeweiligen Gerät fahren, da das Bedienungspersonal vor Ort häufig mit der Bedienung des Geräts nicht vertraut ist, wodurch beträchtliche Kosten entstehen.

Der Erfindung liegt die Aufgabe zugrunde, eine Vorrichtung zur Überwachung und Steuerung von Geräten zur Herstellung von Speiseeis, Milchshake oder dergleichen zu schaffen, die den erforderlichen Einsatz eines Kundendienstes vor Ort an den Geräten auf ein Minimum reduziert.

Die Aufgabe wird durch die Merkmale des Anspruchs 1 gelöst. Der Kern der Erfindung besteht darin, in den jeweiligen Geräten und in einer Basisstation miteinander kommunizierende Mobilfunk-Einheiten vorzusehen, wobei ausgewählte Betriebsdaten über eine Prozessor-Einrichtung in dem jeweiligen Gerät an die Basisstation übermittelt werden und anschließend entsprechende Steuerdaten an das jeweilige Gerät gesendet werden, um den gewünschten Betriebszustand einzustellen oder wieder herzustellen. Vorteilhaft hieran ist, daß in den meisten Fällen durch diese Ferndiagnose und Fernsteuerung eine Fahrt des Kundendienstes zu dem jeweiligen Gerät nicht erforderlich ist.

Gemäß Anspruch 8 ist am Rührwerk ein Drehzahl-Sensor vorgesehen. Bei einem Drehstrom-Motor, wie er typischerweise in Geräten zur Herstellung von Speiseeis verwendet wird, haben Spannungsschwankungen des Stromnetzes, wie sie häufig in Ländern auftreten, in denen die Geräte aufgestellt sind, keinen Einfluß auf die Drehzahl des Motors. Eine Veränderung der Drehzahl des Motors hängt somit unmittelbar mit der Viskosität des Ansatzes in dem Gefrierzylinder zusammen, so daß aus der gemessenen Drehzahl auf die Viskosität des Ansatzes geschlossen werden kann und die Viskosität somit einfach ermittelt werden kann.

Weitere Vorteile ergeben sich aus den anderen Unteransprüchen.

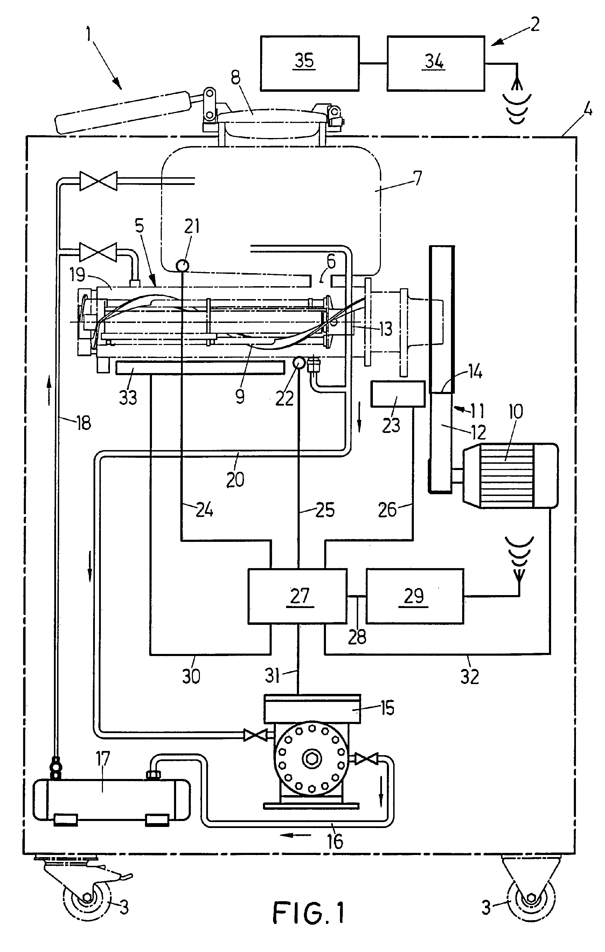

Zusätzliche Merkmale und Vorteile der Erfindung ergeben sich aus der Beschreibung eines Ausführungsbeispiels anhand der Zeichnung. Es zeigt
- Fig. 1: eine Vorrichtung zur Herstellung von Speiseeis in einem schematisierten Vertikal-Längs-Schnitt mit einer Basisstation.

Eine Vorrichtung zur Überwachung und Steuerung von Geräten zur Herstellung von Speiseeis, Milchshake oder dergleichen aus einem pumpfähigen Ansatz weist mindestens ein solches Gerät 1 sowie eine Basisstation 2 auf. Die Geräte 1 sind bei den jeweiligen Kunden, d.h. zum Beispiel in Kaufhäusern, aufgestellt. Die Basisstation 2 befindet sich dagegen beim Hersteller oder zentralen Vertrieb der Geräte 1, also typischerweise mehrere 100 Kilometer vom Standort der Geräte 1 entfernt. Die einzelnen Geräte 1 übermitteln Daten an die Basisstation 2, so daß der Hersteller jederzeit über den Betriebszustand der einzelnen Geräte informiert ist und gegebenenfalls in die Funktionsweise der Geräte steuernd eingegriffen werden kann, ohne vor Ort an den einzelnen Geräten 1 tätig zu werden.

Im folgenden wird unter Bezugnahme auf Fig. 1 der Aufbau eines Gerätes 1 erläutert. Das Gerät 1 ist in seinem Grundaufbau bekannt, und zwar beispielsweise aus der EP 0 225 989 A1, der EP 0 229 237 A1 und der EP 0 503 254 A1. Das Gerät 1 weist ein über Rollen 3 auf dem Boden abgestütztes, also verfahrbares Gehäuse 4 auf. Im oberen Bereich des Gehäuses 4 ist ein als Gefrierzylinder 5 ausgebildeter Temperier-Behälter angeordnet, in den über eine Verbindungs-Leitung 6 ein oberhalb des Gefrierzylinders 5 angeordneter Vorrats-Behälter 7 für einen pumpfähigen Ansatz von Speiseeis, Milchshake oder dergleichen einmündet. Der Temperier-Behälter dient dem Temperieren des Ansatzes, d.h. der Einstellung einer Temperatur, die ungefähr zwischen -10 °C und +90 °C liegen kann. Der Vorrats-Behälter 7 ist über einen an der Oberseite des Gehäuses 4 befindlichen Deckel 8 luftdicht verschließbar.

Im Gefrierzylinder 5 ist ein Rühr- und Schabwerk angeordnet, das nachfolgend als Rührwerk 9 bezeichnet wird. Dieses ist durch einen Motor 10 über einen Riemenantrieb 11 antreibbar, wobei der Riemen 12 des Riemenantriebes 11 rührwerksseitig über eine mit dem Rührwerk 9 über eine Rührwerks-Welle 13 verbundene Riemen-Scheibe 14 geführt ist.

Zur Kühlung ist ein Kühlmittelkreislauf vorgesehen. Dieser weist im unteren Bereich des Gehäuses 4 einen Kompressor 15 und einen über eine Leitung 16 mit diesem verbundenen Kühlmittel-Behälter 17 auf. Der Kühlmittel-Behälter 17 ist über eine Leitung 18 mit in Fig. 1 nicht dargestellten Kühlschlangen, die im Vorrats-Behälter 7 angeordnet sind, und einem den Gefrierzylinder 5 umgebenden Kühlmantel 19 verbunden, die von dem Kühlmittel durchströmbar sind. Das den Vorrats-Behälter 7 und den Kühlmantel 19 verlassende Kühlmittel wird über eine Leitung 20 zum Kompressor 15 transportiert, womit sich der Kühlmittelkreislauf schließt. Ferner ist ein Druckluftkreislauf zum Einschlagen von Luft in das im Gefrierzylinder 5 herzustellende Speiseeis, Milchshake oder dergleichen sowie eine Entnahmevorrichtung hierfür vorgesehen, die beide in Fig. 1 nicht dargestellt sind.

In dem Gerät 1 ist eine Betriebsdaten-Erfassungs-Einrichtung zur Erfassung eines ausgewählten Satzes von Betriebsdaten vorgesehen. Diese weist einen Temperatur-Fühler 21 auf, der in dem Vorrats-Behälter 7 zur Messung der Temperatur des Ansatzes in dem Vorrats-Behälter 7 angeordnet ist. Ferner ist ein identisch zu dem Temperatur-Fühler 21 ausgebildeter Temperatur-Sensor 22 im Gefrierzylinder 5 vorgesehen, um die Temperatur des Ansatzes in dem Gefrierzylinder 5 zu bestimmen. Des weiteren ist gegenüber der Riemen-Scheibe 14 ein berührungslos arbeitender, allgemein bekannter Drehzahl-Sensor 23 vorgesehen, der die Drehzahl der Riemen-Scheibe 14 ermittelt, die zu diesem Zweck kreisförmig angeordnete Markierungs-Bohrungen aufweist. Die Drehzahl der Riemen-Scheibe 14 steht in einem festen Verhältnis zur Drehzahl des Motors, das sich aus dem Übersetzungsverhältnis des Riemenantriebs ergibt. Bei dem Motor 10 handelt es sich um einen handelsüblichen Drehstrommotor, dessen Drehzahl auch durch nicht selten auftretende Spannungsschwankungen im wesentlichen unbeeinflußt ist. Aus der vom Drehzahl-Sensor 23 ermittelten Drehzahl kann deshalb auf die Viskosität und damit die Konsistenz des Ansatzes im Gefrierzylinder 5 geschlossen werden, da sich bei zunehmender Viskosität des Ansatzes die vom Drehzahl-Sensor 23 gemessene Drehzahl verringert. Durch eine Messung der Drehzahl ist somit eine Viskositätsmessung des Ansatzes im Gefrierzylinder 5 möglich.

Der Temperatur-Fühler 21, der Temperatur-Sensor 22 sowie der Drehzahl-Sensor 23 sind jeweils über Datenübertragungs-Leitungen 24, 25 und 26 mit einer Prozessor-Einrichtung 27 eingangsseitig verbunden. Die Prozessor-Einrichtung 27, die als normaler Mikroprozessor ausgebildet sein kann, ist über eine Datenübertragungs-Leitung 28 mit einer als Mobilfünk-Einheit 29 ausgebildeten Datenübertragungs-Station verbunden, welche nach dem GSM- oder UMTS-Standard arbeitet und der Übertragung von Daten an die Basisstation 2 und dem Empfang von Daten von der Basisstation 2 dient. Die Prozessor-Einrichtung 27 ist ausgangsseitig zur Beeinflussung von Betriebsdaten des Geräts 1 über Datenübertragungs-Leitungen 30, 31, 32 mit einem den Gefrierzylinder 5 teilweise umgebenden Heiz-Element 33, dem Kompressor 15 und dem Motor 10 verbunden. Durch entsprechende, von der Prozessor-Einrichtung 27 ausgesandte Signale kann die Temperatur des Heiz-Elements 33 und damit die Temperatur des Ansatzes im Gefrierzylinder 5 und im Vorrats-Behälter 7 verändert werden. Durch Gabe eines Steuersignals auf den Kompressor 15 kann dessen Leistung verändert und somit die Temperatur des Ansatzes wahlweise im Vorrats-Behälter 7 oder im Gefrierzylinder 5 reduziert werden. Durch Gabe eines Steuersignals auf den Motor 10 kann dessen Leistungsabgabe verändert und damit die Einwirkung des Rührwerks 9 auf den Ansatz verändert werden. Insbesondere kann der Motor 10 ein- oder ausgeschaltet werden.

Die Basisstation 2 weist eine als Mobilfunk-Einheit 34 ausgebildete Basis-Datenübertragungs-Station zur drahtlosen Übertragung von Daten zwischen der Mobilfünk-Einheit 34 und den jeweiligen Mobilfunk-Einheiten 29 auf. Ferner ist eine Basis-Steuereinheit 35 vorgesehen, die die empfangenen Betriebsdaten der jeweiligen Geräte 1 erfaßt, verarbeitet und gegebenenfalls Steuersignale über die Mobilfunk-Einheit 34 an die jeweiligen Geräte 1 sendet, um deren Betriebszustand zu beeinflussen und insbesondere einen einwandfreien Betriebszustand wieder herzustellen.

Im folgenden wird die Funktionsweise der Vorrichtung zur Überwachung und Steuerung der Geräte 1 anhand verschiedener Betriebszustände beschrieben. Zu vorgegebenen Zeitpunkten werden von den Geräten 1 Daten an die Basisstation 2 übertragen, die umfassen: Gerätenummer, Zeit, vom Temperatur-Fühler 21 gemessene Temperatur, vom Temperatur-Sensor 22 gemessene Temperatur, vom Drehzahl-Sensor 23 gemessene Drehzahl, Grundeinstellung des Geräts 1 und bestimmte von der Prozessor-Einrichtung 27 ermittelte, typisierte Fehlernummern. Unter Grundeinstellung wird die vom Bedienungspersonal vorgegebene Stellung eines Schalters verstanden, wobei zwischen den Zuständen "Eisabgabe", "Pasteurisierung" und "Konservieren" ausgewählt werden kann.

Im Betriebszustand "Eisabgabe" ist die Messung der Viskosität des Ansatzes im Gefrierzylinder 5 und damit des herzustellenden Speiseeises von zentraler Bedeutung. Ist die Viskosität zu gering, so würde das hergestellte Speiseeis beim Konsum zu sehr tropfen. Ist die Viskosität des Ansatzes zu hoch, so ist die Entnahme des Speiseeises sowie das Einschlagen von Luft nicht mehr möglich. Ein bestimmender Faktor für die Viskosität des Ansatzes ist die Temperatur. Die Basis-Steuereinheit 35 überwacht insofern, daß die vom Temperatur-Fühler 21 gemessene Temperatur bei nicht mehr als 5 °C liegt. Sollte die Temperatur zu hoch sein, so wird über die Mobilfunk-Einheiten 34 und 29 und die Prozessor-Einrichtung 27 ein Steuersignal auf den Kompressor 15 gegeben, so daß in Folge die Temperatur des Ansatzes im Vorrats-Behälter 7 und im Gefrierzylinder 5 reduziert wird. Nach Erreichen der vorgegebenen Temperatur wird der Kompressor 15 über ein entsprechendes Steuersignal wieder abgeschaltet oder seine Leistung reduziert. Entspricht die Viskosität des Ansatzes im Gefrierzylinder 5 und damit die vom Drehzahl-Sensor 23 gemessene Drehzahl nicht dem Sollwert, so wird für den Fall, daß die Viskosität zu gering ist, über den Kompressor 15 die Temperatur des Ansatzes im Gefrierzylinder reduziert. Ist die Viskosität zu hoch, so wird über die Basis-Steuereinheit 35 das Heiz-Element 33 angesteuert, um die Temperatur des Ansatzes im Gefrierzylinder zu erhöhen. Im Fall eines Einfrierens des Ansatzes geht die vom Drehzahl-Sensor 23 gemessene Drehzahl auf Null und der Motor 10 wird durch einen Überstromschalter ausgeschaltet. Die Basis-Steuereinheit 35 erkennt diesen Zustand aus der Drehzahl gleich Null und der zu tiefen, vom Temperatur-Sensor 22 gemessenen Temperatur und gibt ein Steuersignal auf das Heiz-Element 33 zu heizen. Wenn der Ansatz im Gefrierzylinder 5 wieder aufgetaut ist, wird ein Startsignal auf den Motor 10 gegeben, das Heiz-Element 33 abgeschaltet und der Kompressor 15 wieder auf Normalbetrieb geschaltet.

Im Betriebszustand "Pasteurisierung" wird der Ansatz im Gefrierzylinder 5 und im Vorrats-Behälter 7 erwärmt. Für die erfolgreiche Durchführung einer Pasteurisierung muß der Ansatz im Vorrats-Behälter, der aufgrund der Lage der Heiz-Elemente 33 am Gefrierzylinder 5 eine geringere Temperatur als der Ansatz im Gefrierzylinder 5 hat, für mindestens 30 Sekunden eine Temperatur von mindestens 73 °C erreichen. Von der Basis-Steuereinheit 35 wird insbesondere die vom Temperatur-Fühler 21 gemessene maximale Temperatur überwacht. Wird die für die Pasteurisierung erforderliche Temperatur erreicht, so wird das Heiz-Element 33 ausgeschaltet. Die Basis-Steuereinheit 35 erfaßt auch die zwischen erfolgreich durchgeführten Pasteurisierungen liegenden Zeitintervalle. Sollten diese über einem vorgegebenen Grenzwert liegen, so wird entweder durch die Basis-Steuereinheit 35 ein Steuersignal auf das Heiz-Element 33 zum Beginn der Pasteurisierung gegeben oder die Bedienungsperson des jeweiligen Gerätes 1 aufgefordert, die Geräteeinstellung "Pasteurisierung" zu wählen. Tut sie dies nicht, so wird das Gerät 1 durch die Basis-Steuereinheit 35 abgeschaltet, da sonst eine Kontaminierung des Ansatzes durch Bakterien droht. Wird ein Pasteurisierungsvorgang zum Beispiel durch eine Spannungsunterbrechung am jeweiligen Gerät 1 unterbrochen, bevor die für die Pasteurisierung erforderliche Temperatur erreicht ist, so wird dies von der Basis-Steuereinheit 35 erkannt. Sobald die Spannung am Gerät wieder anliegt, wird der Pasteurisierungsvorgang erneut begonnen, vorausgesetzt, daß die Zeitunterbrechung nicht zu lang war. War die Zeitunterbrechung zu lang, so daß davon auszugehen ist, daß der Ansatz verdorben ist, wird das Gerät 1 über die Basis-Steuereinheit 35 ausgeschaltet. Es muß dann von fachkundigem Personal gereinigt werden. Übersteigt die Temperatur des Ansatzes 90 °C, so veranlaßt die Basis-Steuereinheit eine Abschaltung des Heiz-Elements 33.

Im Betriebszustand "Konservieren" wird der Ansatz insgesamt auf einer Lagertemperatur gehalten, die zwischen 0 °C und 5 °C liegt, so daß der Ansatz zum einen nicht einfriert und zum anderen unterhalb einer vorgegebenen Lagertemperatur gehalten wird. Die Einhaltung der erforderlichen Temperatur erkennt die Basis-Steuereinheit 35 aus den von dem Temperatur-Fühler 21 und dem Temperatur-Sensor 22 gemessenen Temperaturen. Sollte die vorgegebene Temperatur unterschritten werden, so kann entweder durch Reduzierung der Kühlleistung des Kompressors 15 oder durch Hinzuschalten des Heiz-Elements 33 die Temperatur erhöht werden. Sollte die vorgegebene Lagertemperatur überschritten werden, so kann durch eine Erhöhung der Leistung des Kompressors 15 die Temperatur reduziert werden.

Von der Prozessor-Einrichtung 27 werden bestimmte Fehler identifiziert und einer bestimmten Fehlernummer zugeordnet. Durch die Mobilfunk-Einheit 29 wird dann lediglich die Fehlernummer übermittelt. Dies hat den Vorteil, daß die Zahl der zu übertragenden Daten reduziert werden kann und die Auswertung der Daten in der Basis-Steuereinheit 35 vereinfacht wird. Den einzelnen Fehlernummern sind unter anderem die folgenden Fehler zugeordnet, die von der Prozessor-Einrichtung 27 aufgrund der eingehenden Daten ermittelt werden:
- Steigt die Temperatur des Ansatzes im Vorrats-Behälter über 90 °C, so wird das Heiz-Element 33 abgeschaltet. Diesem Zustand wird eine Fehlernummer zugeordnet, der die Basis-Steuereinheit 35 entnehmen kann, daß vermutlich das Heiz-Element 33 fehlerhaft arbeitet.
- Wird beim Pasteurisieren eine vorgegebene maximale Heizzeit überschritten, ohne daß der Ansatz die Zieltemperatur von 73 °C erreicht, so wird dies einer Fehlernummer zugeordnet. Die Basis-Steuereinheit 35 kann hieraus entnehmen, daß das Heiz-Element 33 schadhaft ist und nicht ausreichend heizt.
- Weicht die vom Drehzahl-Sensor 23 gemessene Drehzahl von einer Soll-Drehzahl stark ab, insbesondere, wenn die gemessene Drehzahl gleich Null ist, so wird dies einer Fehlernummer zugeordnet. Die Basis-Steuereinheit 35 ordnet dies unter anderem einem Einfrieren des Gefrierzylinders 5 zu.
- Ist das jeweilige Gerät 1 seit mehr als einer vorbestimmten Dauer in einer Grundeinstellung ohne Kühlung des Ansatzes, so wird dies einer Fehlernummer zugeordnet, da die Gefahr besteht, daß der Ansatz verdirbt.
- Ist der Ansatz seit mehr als einer vorbestimmten Dauer nicht pasteurisiert worden, d.h. nicht für mindestens 30 Sekunden im Vorrats-Behälter 7 eine Temperatur von 73 °C erreicht worden, so wird dies einer Fehlernummer zugeordnet, da die Gefahr eines Verderbens des Ansatzes besteht.
- Geben die Temperatur-Fühler 21 oder 22 beispielsweise Temperaturen von unter -15 °C oder über 90 °C an, so wird dies einer Fehlernummer zugeordnet, da daraus geschlossen werden kann, daß die Temperatur-Fühler möglicherweise schadhaft sind.
- Ist das jeweilige Gerät 1 in der Grundeinstellung "Pasteurisierung" und erfolgt ein Spannungszusammenbruch, so daß die Pasteurisierung nicht fortgesetzt werden kann, so wird dies einer Fehlernummer zugeordnet, damit dann gegebenenfalls nach erneutem Anliegen der Betriebsspannung die Pasteurisierung fortgesetzt oder das Gerät, wenn der verstrichene Zeitraum zu lang ist, außer Betrieb genommen werden kann.

Über die vorausgehend beschriebene Ausführungsform hinaus können weitere Daten erfaßt und an die Basisstation ermittelt werden. Es kann unter anderem der Kältemitteldruck im Kühlkreislauf ermittelt werden. Ferner können Fehler, die auf defekte Leitungen 24, 25, 26, 28, 30, 31, 32 zurückzuführen sind oder Fehler, die auf einen Defekt der Prozessor-Einrichtung 27 zurückzuführen sind, übertragen werden.

## Patentansprüche

1. Vorrichtung zur Überwachung und Steuerung von Geräten zur Herstellung von Speiseeis, Milchshake oder dergleichen mit
a) mindestens einem Gerät (1) zur Herstellung von Speiseeis, Milchshake oder dergleichen aus einem pumpfähigen Ansatz, welches aufweist
i) einen Vorrats-Behälter (7) für den Ansatz,
ii) einen mit dem Vorrats-Behälter (7) verbundenen Temperier-Behälter (5) zum Temperieren des Ansatzes,
iii) eine Betriebsdaten-Erfassungs-Einrichtung zur Erfassung eines ausgewählten ersten Satzes von Betriebsdaten,
iv) eine Betriebsdaten-Beeinflussungs-Einrichtung zur Beeinflussung eines ausgewählten zweiten Satzes von Betriebsdaten,
v) eine Prozessor-Einrichtung (27), welche mit der Betriebsdaten-Erfassungs-Einrichtung und der Betriebsdaten-Beeinflussungs-Einrichtung jeweils in datenübertragender Weise verbunden ist, und
vi) eine mit der Prozessor-Einrichtung in datenübertragender Weise verbundene Datenübertragungs-Station (29) zur drahtlosen Übertragung von Daten und
b) einer Basisstation (2), welche aufweist
i) eine Basis-Datenübertragungs-Station (34) zur drahtlosen Übertragung von Daten zwischen der Basis-Datenübertragungs-Station (34) und der mindestens einen Datenübertragungs-Station (29) und
ii) eine Basis-Steuereinheit (35) für die Überwachung und/oder Steuerung des mindestens einen Geräts (1).

2. Vorrichtung gemäß Anspruch 1, **dadurch gekennzeichnet, daß** die Betriebsdaten-Erfassungs-Einrichtung eine Temperatur-Meßeinrichtung zur Messung der Temperatur des Ansatzes aufweist.

3. Vorrichtung gemäß Anspruch 1 oder 2, **dadurch gekennzeichnet, daß** die Betriebsdaten-Erfassungs-Einrichtung eine Viskositäts-Meßeinrichtung zur Messung der Viskosität des Ansatzes aufweist.

4. Vorrichtung gemäß einem der vorangehenden Ansprüche, **dadurch gekennzeichnet, daß** die Betriebsdaten-Beeinflussungs-Einrichtung eine Temperatur-Veränderungs-Einrichtung zur Veränderung der Temperatur des Ansatzes aufweist.

5. Vorrichtung gemäß Anspruch 2, **dadurch gekennzeichnet, daß** die Temperatur-Meßeinrichtung einen im Vorrats-Behälter (7) angeordneten Temperatur-Fühler (21) zur Messung der Temperatur des Ansatzes im Vorrats-Behälter (7) aufweist.

6. Vorrichtung gemäß Anspruch 2, **dadurch gekennzeichnet, daß** die Temperatur-Meßeinrichtung einen im Temperier-Behälter (5) angeordneten Temperatur-Sensor (22) zur Messung der Temperatur des Ansatzes im Temperier-Behälter (5) aufweist.

7. Vorrichtung gemäß Anspruch 3, **dadurch gekennzeichnet, daß** in dem Temperier-Behälter (5) ein durch einen Motor (10) drehantreibbares Rührwerk (9) angeordnet ist.

8. Vorrichtung gemäß Anspruch 7, **dadurch gekennzeichnet, daß** die Viskositäts-Meßeinrichtung einen Drehzahl-Sensor (23) zur Ermittlung der Drehzahl des Motors (10) aufweist.

9. Vorrichtung gemäß Anspruch 4, **dadurch gekennzeichnet, daß** die Temperatur-Veränderungs-Einrichtung ein am Temperier-Behälter (5) angeordnetes Heiz-Element (33) aufweist.

10. Vorrichtung gemäß Anspruch 4, **dadurch gekennzeichnet, daß** die Temperatur-Veränderungs-Einrichtung einen am Temperier-Behälter (5) angeordneten Kühlmantel (19) aufweist.

11. Vorrichtung gemäß einem der vorangehenden Ansprüche, **dadurch gekennzeichnet, daß** die mindestens eine Datenübertragungs-Station und/oder die Basis-Datenübertragungs-Station eine Mobilfunk-Einheit (29, 34) aufweisen.

12. Vorrichtung gemäß Anspruch 11, **dadurch gekennzeichnet, daß** die Mobilfunk-Einheiten (29, 34) nach dem GSM- oder UMTS-Standard arbeiten.
